# EUROPEAN PATENT APPLICATION

(11) **EP 2 339 688 A1**
(43) Date of publication of application: **29.06.2011**
(21) Application number: 10816837.8
(22) Date of filing: 19.08.2010
(51) Int. Cl.: H01M 10/50, H01M 2/10

(54) **BATTERY MODULE, METHOD FOR MANUFACTURING SAME, AND TEMPERATURE ADJUSTMENT SYSTEM**

(30) Priority: 18.09.2009 JP 2009216464
(71) Applicant: Panasonic Corporation, Kadoma-shi Osaka 571-8501 (JP)
(72) Inventor: ITOI, Toshiki, Osaka-shi Osaka 540-6207 (JP); YASUI, Shunsuke, Osaka-shi Osaka 540-6207 (JP); TAKASAKI, Hiroshi, Osaka-shi Osaka 540-6207 (JP)
(74) Representative: Grünecker, Kinkeldey, Stockmair & Schwanhäusser Anwaltssozietät
(86) International application number: PCT/JP2010/005133
(87) International publication number: WO 2011/033722

(57) **Abstract**

The temperature adjusting unit (5) is made of a resin-molded article in which a first flat portion (73), a second flat portion (75), and a side wall portion (77) are integrally formed. A holding portion (81) and a flow path (85) are separated by the side wall portion (77). Each cell (21) is held in close contact with the holding portion (81) separated by the side wall portion (77).

## Description

### TECHNICAL FIELD

The present invention relates to battery modules, methods for fabricating the battery modules, and temperature adjusting systems.

### BACKGROUND ART

In recent years, secondary batteries which can be used repeatedly have been used as power sources for driving mobile electronic devices, portable communication devices, etc., to save resources and conserve energy. Further, to reduce the amount of use of fossil fuel and reduce the amount of emission of carbon dioxide, the secondary batteries have been expected to be used as a power source for driving a vehicle.

Specifically, the technique in which general-purpose batteries are connected together in parallel and/or in series to form a battery module and in which the battery modules are combined together to be used for various purposes has been adopted. This technique enables downsize and light weight of the battery module by increasing performance of the batteries (cells) which form the battery module. Thus, workability can be improved in combining the battery modules, and flexibility in mounting the battery module in areas of limited space, such as a vehicle, can be increased.

The performance and lifetime of batteries depend on environmental temperatures. Thus, temperature variations of the cells in a battery module result in variations in performance and lifetime of the cells in the battery module. For this reason, it is suggested to adjust temperatures of the cells forming the battery module using a temperature adjusting unit (Patent Documents 1-3).

### CITATION LIST

### PATENT DOCUMENT

Patent Document 1: Japanese Patent Publication No. 2003-291656
Patent Document 2: Japanese Patent Publication No. 2000-251951
Patent Document 3: Japanese Patent Publication No. H11-54157

### SUMMARY OF THE INVENTION

### TECHNICAL PROBLEM

However, in the conventional battery modules, the cells are not in close contact with the temperature adjusting unit, and therefore, it is difficult to reduce temperature variations of the cells.

### SOLUTION TO THE PROBLEM

To reduce the temperature variations of the cells in the battery module, the cells may be held in close contact with the temperature adjusting unit, and a liquid (a liquid for adjusting the temperatures of the cells) may be allowed to flow on the outside of the cells which are brought in close contact with the temperature adjusting unit. The temperature adjusting unit may be made of resin so that the cells can be held in close contact with the temperature adjusting unit.

The method for fabricating the temperature adjusting unit made of resin may include, for example, forming a holding portion (a cell is held in close contact with the holding portion) and a flow path (the above liquid flows through the flow path), and thereafter bringing the holding portion and the flow path into close contact with each other. However, according to this fabrication method, the holding portion and the flow path may be separated from each other due to shock, etc., if an adhesion strength between the holding portion and the flow path is insufficient. Thus, it is preferable that the holding portion and the flow path are integrally formed.

Blow molding and injection molding are generally known as techniques for integrally forming a resin-molded article.

Blow molding is suitable as a technique for forming a resin-molded article having a hollow. In blow molding, in general, a resin material having a hollow is melted, and the melted resin material is placed between molds, and then air is supplied into the hollow of the melted resin material. Thus, it becomes difficult to form the resin-molded article as the depth of the hollow of the resin-molded article is increased in a direction perpendicular to the direction along which the air is supplied.

On the other hand, in injection molding, a melted resin is injected into molds. Thus, injection molding is suitable as a technique for forming a resin-molded article having a complicated shape.

The inventors of the present application made the present invention, based on the features of the injection molding and the blow molding.

A battery module of the present invention includes the following temperature adjusting unit, for example. A temperature adjusting unit of the present invention is a resin-molded article in which a first flat portion, a second flat portion, and a side wall portion are integrally formed. The side wall portion separates a holding portion and a flow path from each other. A cell is held in close contact with the holding portion partitioned by the side wall portion. The temperature adjusting unit may be formed by injection molding or blow molding.

Here, to "adjust a temperature" means to raise or reduce a temperature.

The first flat portion and the second flat portion may have a surface that is not flat. For example, the surface of the first flat portion and the surface of the second flat portion may be curved or uneven.

The state in which a "cell is held in close contact with the holding portion" is the state in which a cell is in close contact with the side wall portion which defines the holding portion, and is held by the holding portion. For example, the cells are forcibly inserted into the holding portion.

### ADVANTAGES OF THE INVENTION

According to the present invention, temperature variations of the cells of a battery module can be reduced.

### BRIEF DESCRIPTION OF THE DRAWINGS

[FIG. 1] FIG. 1 is an exploded perspective view of a battery module according to the first embodiment of the present invention.
[FIG. 2] FIG. 2 is a vertical cross section of a cell according to the first embodiment of the present invention.
[FIG. 3] FIG. 3 is an exploded perspective view of a battery pack according to the first embodiment of the present invention.
[FIG. 4] FIG. 4(a) is an enlarged view of the IVA area shown in FIG. 3. FIG. 4(b) is an enlarged view of the IVB area shown in FIG. 3.
[FIG. 5] FIG. 5 shows a negative electrode connecting plate, an insulating plate, and a positive electrode connecting plate which comprise a battery pack according to the first embodiment of the present invention, viewed from above.
[FIG. 6] FIG. 6 is a cross section taken along the line VI-VI in FIG. 1.
[FIG. 7] FIG. 7 is a cross section taken along the line VII-VII in FIG. 1.
[FIG. 8] FIG. 8(a) is an oblique view of a temperature adjusting unit according to the first embodiment of the present invention. FIG. 8(b) is a view from above.
[FIG. 9] FIG. 9(a) is a cross section taken along the line IXA-IXA in FIG. 8. FIG. 9(b) is a cross section taken along the line IXB-IXB in FIG. 8.
[FIG. 10] FIG. 10(a) is a cross section taken along the line XA-XA in FIG. 8. FIG. 10(b) is a cross section taken along the line XB-XB in FIG. 8.
[FIG. 11] FIG. 11(a) is a cross section for showing a state in which cells are held in close contact with the structure shown in FIG. 9(a) and in which a liquid is supplied. FIG. 11(b) is a cross section for showing a state in which a liquid is supplied to the structure shown in FIG. 9(b).
[FIG. 12] FIG. 12(a) is a cross section for showing a state in which cells are held in close contact with the structure shown in FIG. 10(a) and in which a liquid is supplied. FIG. 12(b) is a cross section for showing a state in which a liquid is supplied to the structure shown in FIG. 10(b).
[FIG. 13] FIG. 13 is a block diagram of a temperature adjusting system according to the first embodiment of the present invention.
[FIG. 14] FIG. 14 is a flow diagram for showing a method for fabricating a battery module according to the first embodiment of the present invention.
[FIG. 15] FIG. 15 is a cross section for showing a state in which cells are held in close contact with a temperature adjusting unit according to the first variation of the first embodiment of the present invention.
[FIG. 16] FIG. 16 is a cross section for showing a state in which cells are held in close contact with a temperature adjusting unit according to the second variation of the first embodiment of the present invention.
[FIG. 17] FIG. 17(a) is an oblique view of a temperature adjusting unit according to the second embodiment of the present invention. FIG. 17(b) is a view from above.
[FIG. 18] FIG. 18 is a cross section taken along the line XVIII-XVIII in FIG. 17(b).
[FIG. 19] FIG. 19 is a cross section for showing a state in which cells are held in close contact with a structure shown in FIG. 18 and in which a liquid is supplied.
[FIG. 20] FIG. 20 is a flow diagram for showing a method for fabricating a battery module according to the second embodiment of the present invention.
[FIG. 21] FIG. 21 is an oblique view of a temperature adjusting unit according to the third embodiment of the present invention.
[FIG. 22] FIG. 22 is a cross section taken along the line XXII-XXII in FIG. 21.
[FIG. 23] FIG. 23 is a cross section for showing a state in which cells are held in close contact with the structure shown in FIG. 22 and in which a liquid is supplied.
[FIG. 24] FIG. 24 is a block diagram of a temperature adjusting system according to the third embodiment of the present invention.
[FIG. 25] FIG. 25 is an exploded perspective view of a battery pack having a different structure.

### DESCRIPTION OF EMBODIMENTS

Embodiments of the present invention will be described in detail hereinafter based on the drawings. The present invention is not limited to the following embodiments. In the following descriptions, like reference characters may be used for identical elements. The terms "above," "under," "in front," "front," and "back" correspond to "above," "under," "in front," "front," and "back" in the drawings.

### «First Embodiment of Invention»

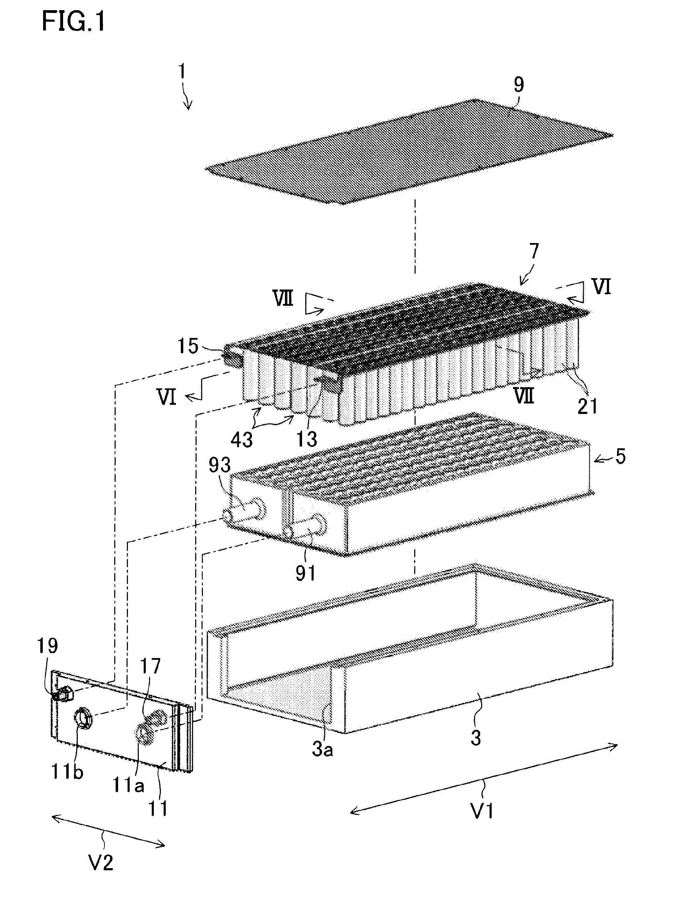

FIG. 1 is an exploded perspective view of a battery module 1 according to the first embodiment.

The battery module 1 of the present embodiment includes a temperature adjusting unit 5 and an battery pack assembly 7 which are accommodated in an accommodating portion 3a of a resin case 3. The upper face of the accommodating portion 3a is closed by a metal lid 9 (e.g., an aluminum lid). The front face of the accommodating portion 3a is closed by a resin front panel 11.

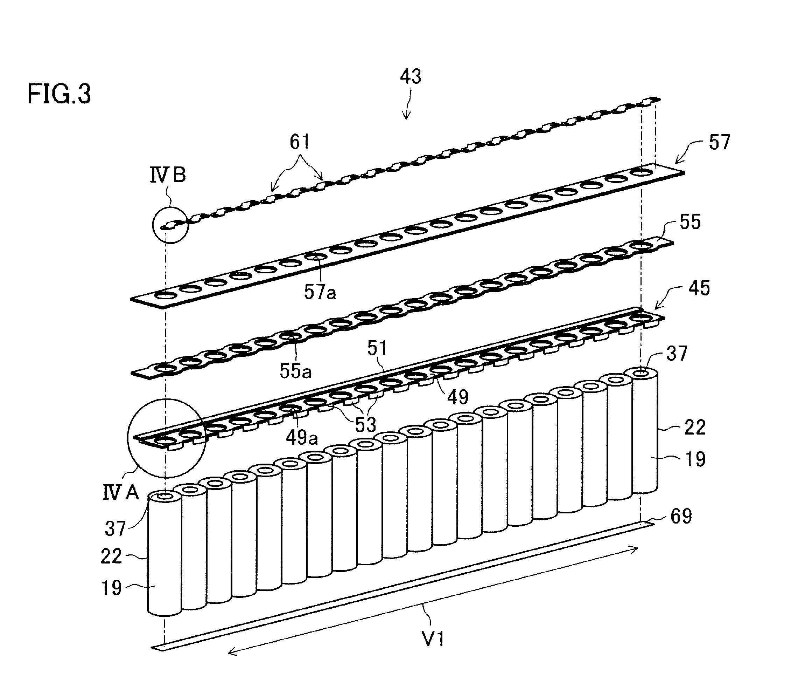

The battery pack assembly 7 includes seven battery packs 43, 43, ... connected together in series, and each battery pack 43 has twenty cells 21, 21, ... connected together in parallel. In the present specification, the direction in which the cells 21, 21, ... are connected together in parallel is referred to as a "parallel direction V1," and the direction in which the battery packs 43, 43, ... are connected together in series is referred to as a "series direction V2." A positive electrode connecting plate 57 (see FIG. 3) included in the battery pack 43 is connected to a positive electrode terminal 13 of the battery pack assembly 7. The positive electrode terminal 13 is connected to a positive electrode terminal 17 for external connection provided to the front panel 11. A negative electrode connecting plate 45 (see FIG. 3) included in the battery pack 43 is connected to a negative electrode terminal 15 of the battery pack assembly 7. The negative electrode terminal 15 is connected to a negative electrode terminal 19 for external connection provided to the front panel 11.

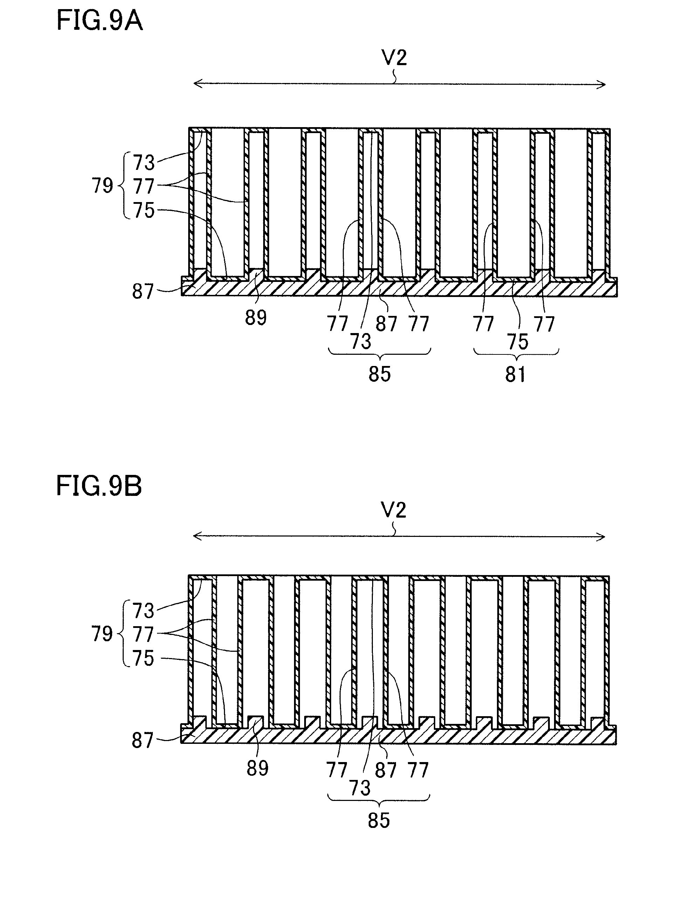

The cells 21, 21, ... which comprise the battery pack assembly 7 are held in close contact with the temperature adjusting unit 5. The temperature adjusting unit 5 allows a liquid (e.g., water) to flow on the outside of the cells 21, 21, ... , thereby adjusting the temperatures of the cells 21, 21, .... The liquid is supplied into a flow path 85 (see FIGS. 9(a) and 9(b)) of the temperature adjusting unit 5 through the first pipe 91, and is discharged from the flow path 85 through the second pipe 93. The first pipe 91 is inserted in a first through hole 11a formed in the front panel 11. The second pipe 93 is inserted in a second through hole 11b formed in the front panel 11.

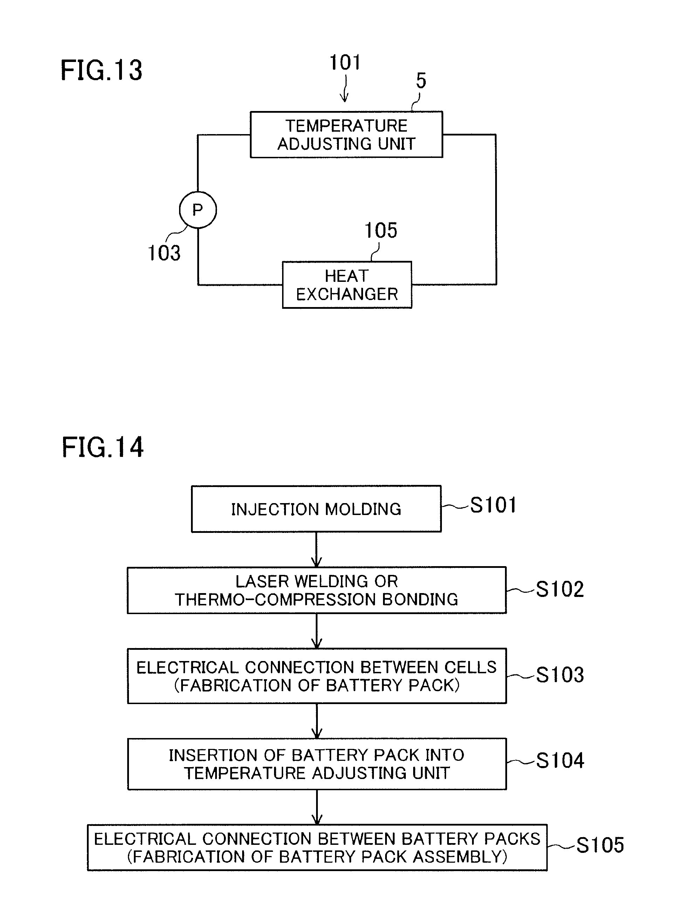

Such a battery module 1 is mounted, for example, on an electric vehicle (a vehicle in which all or part of energy for driving the vehicle is electrical energy), and supplies electrical energy that is necessary, for example, for driving and accelerating the electric vehicle, operating an air conditioner on the electric vehicle, and operating a pump 103 (see FIG. 13) used to circulate the liquid in the temperature adjusting system 101. The battery pack assembly 7 and the temperature adjusting unit 5 will be described below in sequence.

As mentioned above, the battery pack assembly 7 of the present embodiment includes seven battery packs 43, 43, ... connected together in series, and each battery pack 43 has twenty cells 21, 21, ... connected together in parallel. Thus, even if it occurs that some of the cells 21, 21, ... cannot be charged or discharged, it is still possible to charge or discharge the battery pack assembly 7 using the available cells 21, 21, ... , unlike the case in which a plurality of cells are connected together in series to form a battery pack assembly. The structure of the cell 21 will be described first, and then the structures of the battery pack 43 and the battery pack assembly 7 will be described below.

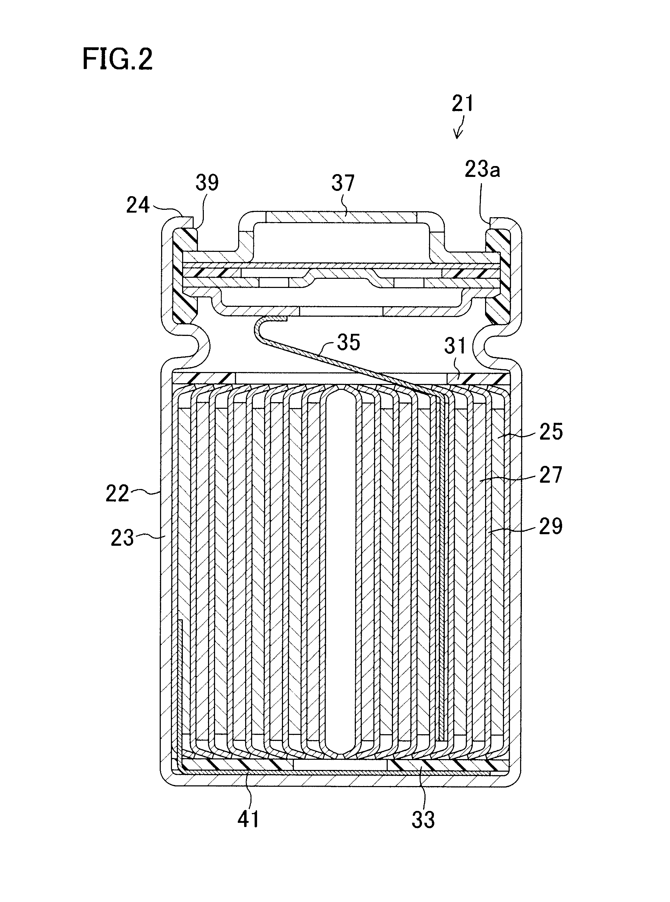

FIG. 2 is a vertical cross section of a cell 21 according to the present embodiment.

The cell 21 according to the present embodiment is a secondary battery, such as a lithium ion secondary battery, and has a cylindrical shape. A positive electrode 25, a negative electrode 27, a porous insulating layer 29, and an electrolyte (not shown) are placed in the battery case 23. The positive electrode 25 and the negative electrode 27 are wound, with the porous insulating layer 29 interposed between the positive electrode 25 and the negative electrode 27, thereby forming an electrode group. The electrode group was placed between an upper insulating plate 31 and a lower insulating plate 33. The positive electrode 25 is connected to a sealing plate 37 via a positive electrode lead 35. The sealing plate 37 is fitted to the opening 23a of the battery case 23 via a resin gasket 39. The negative electrode 27 is connected to the bottom of the battery case 23 via a negative electrode lead 41.

According to the cell 21 of the present embodiment, no insulating film is provided on the outer surface of the battery case 23. Thus, the outer surface 22 and the upper face 24 of the battery case 23 of the cell 21 can function as negative electrode terminals.

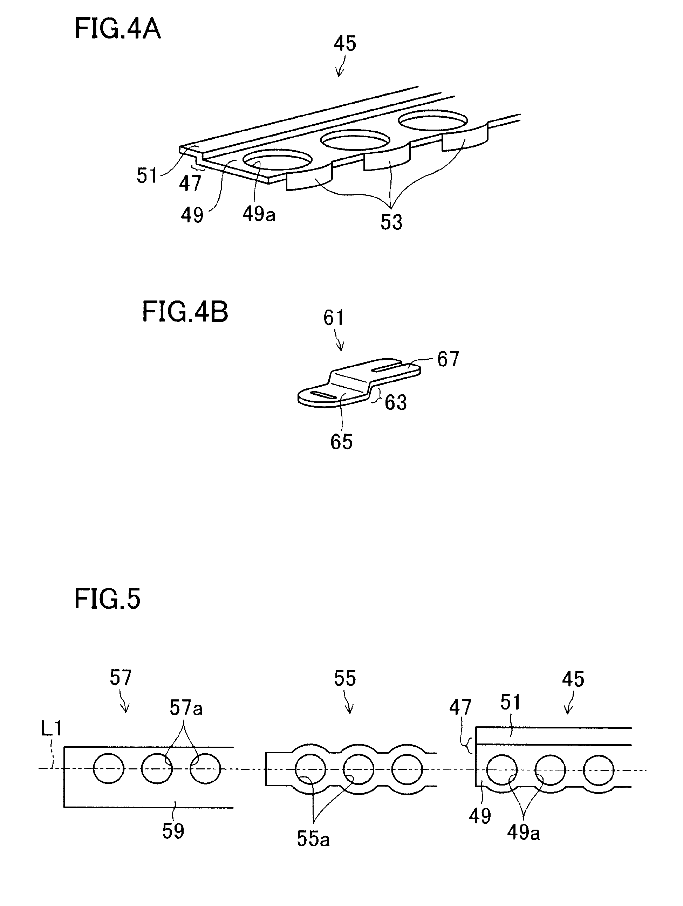

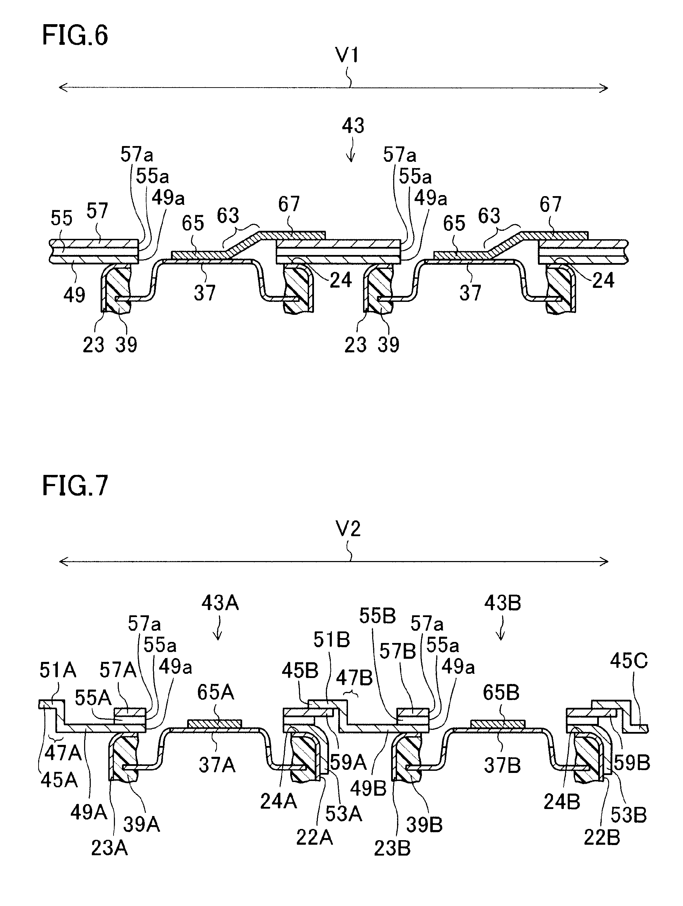

FIG. 3 is an exploded perspective view of the battery pack 43 of the present embodiment. FIG. 4(a) and FIG. 4(b) are enlarged views of the IVA area and the IVB area shown in FIG. 3. FIG. 5 shows a plan view of each of a negative electrode connecting plate 45, an insulating plate 55, and a positive electrode connecting plate 57 included in the battery pack 43. FIG. 6 is a cross section taken along the line VI-VI in FIG. 1. FIG. 7 is a cross section taken along the line VII-VII in FIG. 1.

FIG. 6 is a cross section of two cells 21, 21 connected together in parallel. FIG. 7 is a cross section of the battery pack 43A and the battery pack 43B connected together in series. In FIG. 7, the elements of the battery pack 43A (the battery pack on the left side) are labeled with a reference numeral and the letter "A"; the elements of the battery pack 43B (the battery pack on the right side) are labeled with a reference numeral and the letter "B"; and the elements of the battery pack located on the right side of the battery pack 43B are labeled with a reference numeral and the letter "C."

In each of the battery packs 43 of the present embodiment, the negative electrode terminals (the outer surface 22 and the upper face 24 of the battery case 23) of the cells 21, 21, ... are electrically connected to each other via the negative electrode connecting plate 45. The positive electrode terminals (the sealing plates 37) of the cells 21, 21, ... are electrically connected to each other via the positive electrode connecting plate 57 and twenty positive electrode connecting members 61, 61, .... The structure of the battery pack 43 will be described below by describing elements included in each battery pack 43.

The negative electrode connecting plate (a negative electrode bus bar) 45 is, for example, a nickel plate having a thickness of 0.2 mm, and is provided on the sealing plates 37, 37, ... of the cells 21, 21, ... comprising the battery pack 43. The negative electrode connecting plate 45 extends in a parallel direction V1, and has a step portion 47. This means that the level of a first connecting plate 49 and the level of a second connecting plate 51 are different.

The first connecting plate 49 is connected to the upper faces 24, 24, ... of the battery cases 23, 23, ... of the cells 21, 21, .. , comprising the battery pack 43. The first connecting plate 49 has twenty through holes 49a, 49a, ... in a lengthwise direction of the first connecting plate 49, and the through holes 49a, 49a, ... are spaced apart from each other. The sealing plate 37 of a cell 21 is exposed from each of the through holes 49a (see FIG. 6), thereby avoiding contact between the sealing plates 37 of the cells 21 and the negative electrode connecting plate 45. Further, twenty negative electrode connecting members 53, 53, ... which are spaced apart from each other are provided to the first connecting plate 49 along the lengthwise direction. Each of the negative electrode connecting member 53 is connected to one end of the first connecting plate 49 in a widthwise direction, and is welded to the outer surface 22 of the battery case 23 of the cell 21 (see FIG. 7). Thus, the negative electrode terminals of the cells 21, 21, ... which comprise the battery pack 43 are electrically connected to each other via the negative electrode connecting members 53, 53, ... and the first connecting plate 49.

The positive electrode connecting plate (a positive electrode bus bar) 57 is, for example, a copper plate having a thickness of 1 mm, and is provided on the first connecting plate 49 via the insulating plate 55. The insulating plate 55 and the positive electrode connecting plate 57 have twenty through holes 55a, 55a, ... and twenty through holes 57a, 57a, ... , respectively, which are spaced apart from each other in a lengthwise direction. The through holes 55a and the through holes 57a communicate with the through holes 49a (see FIG. 6). This means that the upper face of each sealing plate 37 is exposed.

The positive electrode connecting plate 57 is connected to the sealing plates 37 of the cells 21 which comprise the battery pack 43, via the positive electrode connecting members 61 (see FIG. 6). The positive electrode connecting members 61 are, for example, a nickel plate having a thickness of 0.2 mm, and has a step portion 63. This means that according to the positive electrode connecting member 61, the level of a first connecting member 65 and the level of a second connecting member 67 are different. The first connecting member 65 is connected to the upper face of the sealing plate 37 of the cell 21 included in the battery pack 43. The second connecting member 67 is connected to the upper face of the positive electrode connecting plate 57 (see FIG. 6). Thus, the positive electrode terminals of the cells 21, 21, ... included in the battery pack 43 are electrically connected to each other via the positive electrode connecting members 61, 61, ... and the positive electrode connecting plate 57.

Further, as shown in FIG. 5, a connecting portion 59 is provided to one end of the positive electrode connecting plate 57 in a widthwise direction. In the battery pack 43, the connecting portion 59 is located on the opposite side from the second connecting plate 51 of the negative electrode connecting plate 45, with respect to the center line L1 connecting the centers of the through holes 49a, 49a, ... , the centers of the through holes 55a, 55a, ... , and the centers of the through holes 57a, 57a, .... Here, the positive electrode connecting plate 57 was described as being a copper plate having a thickness of 1 mm. However, the positive electrode connecting plate 57 may be a board having a pattern opening in the surface.

The battery pack assembly 7 according to the present embodiment is configured by the battery packs 43, 43, ... connected together in series. In each battery pack 43, the second connecting plate 51 of the negative electrode connecting plate 45 and the connecting portion 59 of the positive electrode connecting plate 57 are located on opposite sides with respect to the center line L1. Further, in each negative electrode connecting plate 45, the level of the first connecting plate 49 and the level of the second connecting plate 51 are different. Thus, as shown in FIG. 7, the battery pack 43A and the battery pack 43B can be connected together in series by placing the second connecting plate 51 B of the negative electrode connecting plate 45B of the battery pack 43B on the connecting portion 59A of the positive electrode connecting plate 57A of the battery pack 43A. The battery pack assembly 7 of the present embodiment is fabricated in this way. According to the battery pack assembly 7 of the present embodiment, the battery packs 43, 43, ... can be connected together in series without using a lead, etc.

As shown in FIG. 3, the cells 21, 21, ... which comprise the battery pack 43 are fixed on the upper face of a negative electrode plate 69. The negative electrode plate 69 is, for example, a nickel plate having a thickness of 0.2 mm.

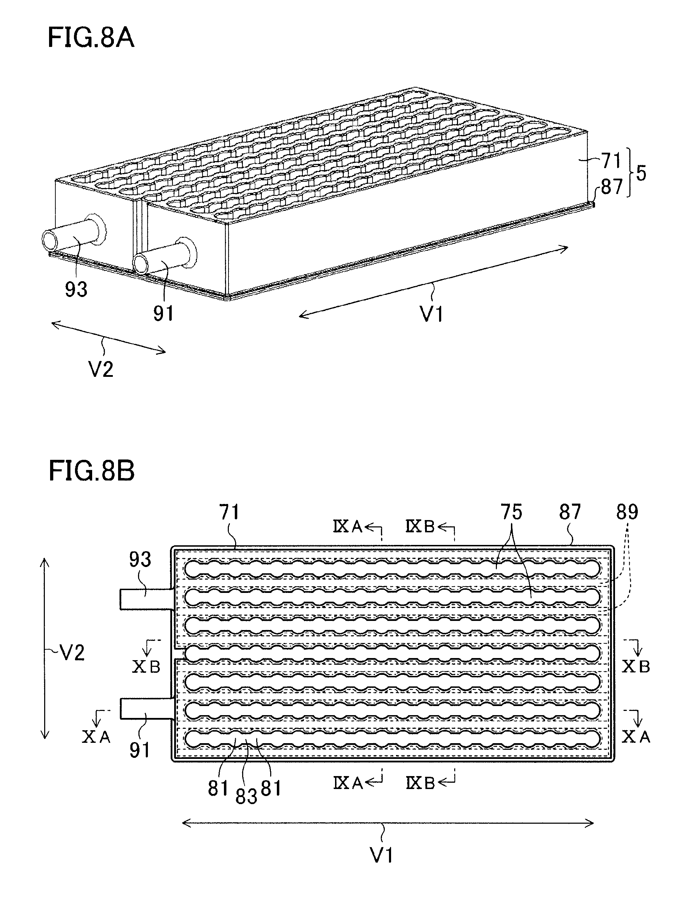

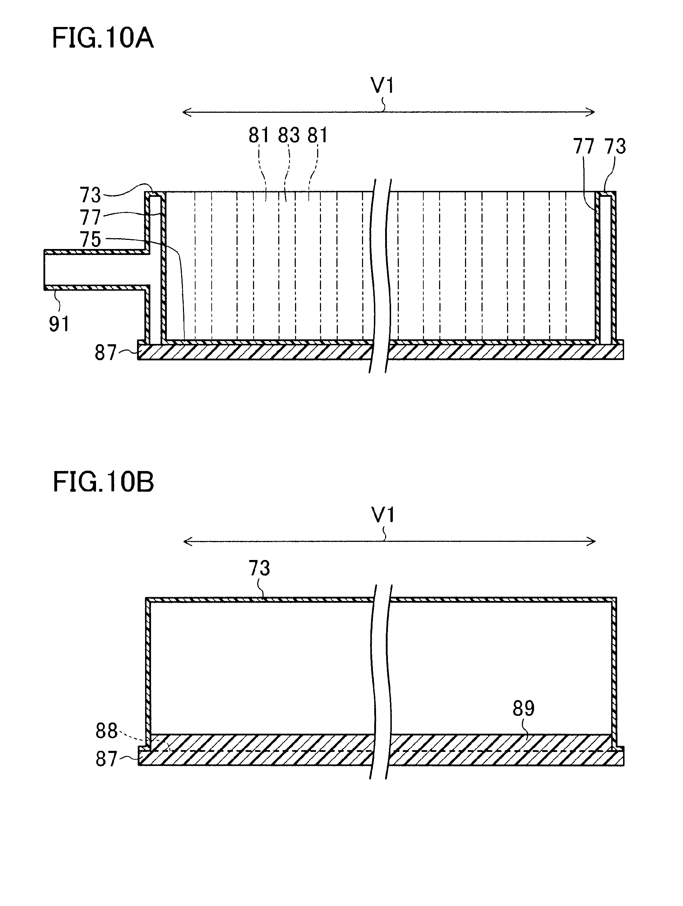

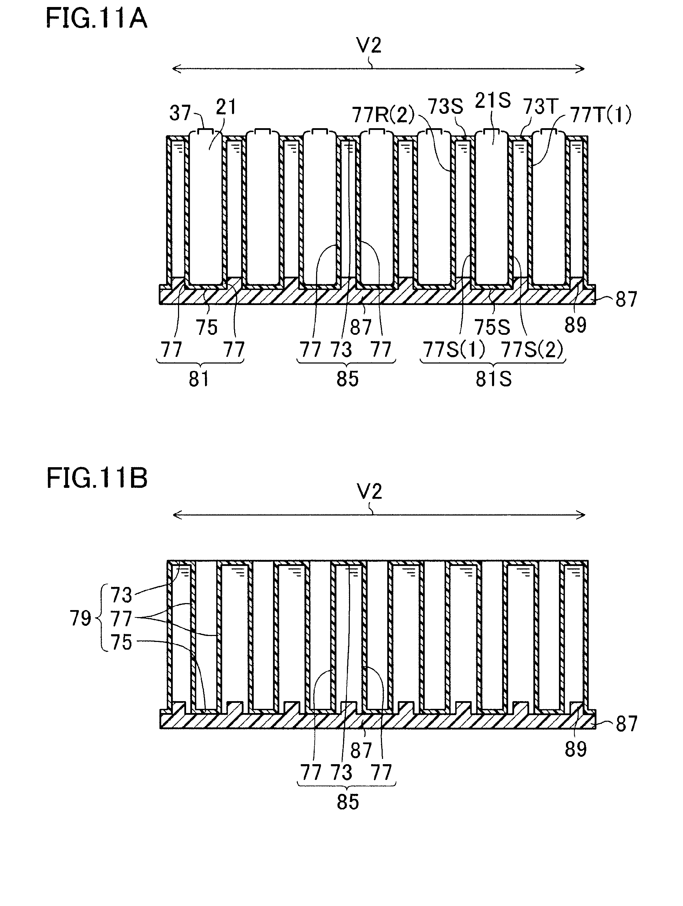

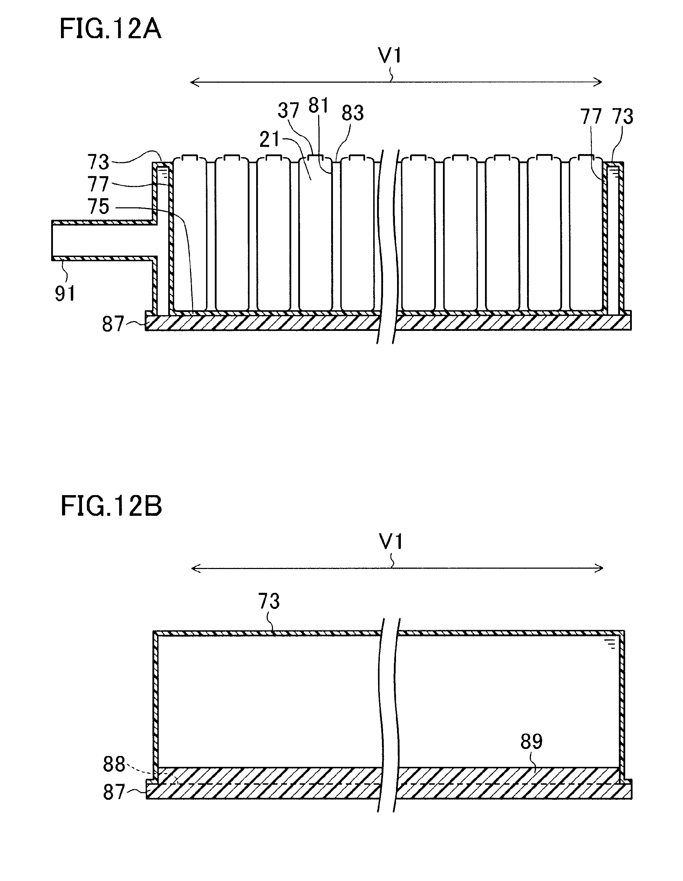

Now, a temperature adjusting unit 5 according to the present embodiment will be described. FIG. 8(a) shows an oblique view of a temperature adjusting unit 5 according to the present embodiment. FIG. 8(b) is a view of the temperature adjusting unit 5 from above. FIG. 9(a) to FIG. 10(b) are cross sections taken along the line IXA-IXA, the line IXB-IXB, the line XA-XA, and the line XB-XB in FIG. 8(b), respectively. FIG. 11(a) to FIG. 12(b) are cross sections for illustrating the states in which each of the cells 21 is held in close contact with a holding portion 81 and in which a liquid is supplied to the flow path 85, in the structures shown in FIG. 9(a) to FIG. 10(b). FIG. 11(a) to FIG. 12(b) are side views of the cells 21, 21,....

The temperature adjusting unit 5 according to the present embodiment includes a unit body 71 and a lid body 87. The unit body 71 is made of such as polypropylene, and formed by injection molding. The unit body 71 has a repeating structure having, as a repeating unit, a resin-molded article 79 in which a first flat portion 73, a side wall portion 77, a second flat portion 75, and a side wall portion 77 are consecutively connected along the series direction V2.

The first flat portion 73 forms the upper face of the unit body 71. The first flat portions 73, 73, ... included in the respective resin-molded articles 79, 79, ... are connected to each other at both ends along the parallel direction V1. Thus, the unit body 71 has one first flat portion 73.

The second flat portion 75 is located on the opposing side of the first flat portion 73, and forms the lower face of the unit body 71. The second flat portions 75, 75, ... included in the respective resin-molded articles 79, 79, ... are not connected together. Thus, the unit body 71 has seven second flat portions 75, 75, .... The battery pack 43 is placed on the second flat portions 75.

The side wall portions 77 extend in a thickness direction of the unit body 71, and are connected to the first flat portion 73 and the second flat portion 75. The two side wall portions 77, 77 included in the respective resin-molded articles 79 are connected to each other at both ends along the parallel direction V1.

The temperature adjusting unit 5 has holding portions 81, 81, ... and a flow path 85. A cell 21 is held in close contact with each holding portion 81. A liquid for adjusting the temperatures of the cells 21, 21, ... (This liquid may simply be referred to as "liquid") flows in the flow path 85. Each holding portion 81 is defined by the second flat portion 75 and the two side wall portions 77, 77. The flow path 85 is defined by the first flat portion 73, the two side wall portions 77, 77, and the lid body 87. The lid body 87 is fixed to the second flat portion 75 side of the unit body 71.

For example, in the case of the holding portion 81S shown in FIG. 11(a), the holding portion 81S is defined by the second flat portion 75S, the side wall portion 77S(1), and the side wall portion 77S(2). The side wall portion 77S(1) forms a flow path 85, together with the first flat portion 73S, the side wall portion 77R(2), and the lid body 87. The side wall portion 77S(2) forms a flow path 85, together with the first flat portion 73T, the side wall portion 77T(1), and the lid body 87. Thus, the cell 21S is in close contact with both of the side wall portion 77S(1) and the side wall portion 77S(2), and is held in a position spacing the side wall portion 77S(1) and the side wall portion 77S(2) from each other with respect to the liquid. In the present specification, the state in which each cell 21 is in close contact with the two side wall portions 77, 77 which define the holding portion 81 may also be described as the state in which "each cell 21 is in close contact with the holding portion 81."

As described above, in the temperature adjusting unit 5 according to the present embodiment, the holding portions 81, 81, ... and the flow path 85 are separated by the side wall portions 77. Therefore, each cell 21 is in close contact with both of the two side wall portions 77, 77 which define the holding portion 81, and is held in a position spacing the two side wall portions 77, 77 from each other with respect to the liquid. Thus, it is possible to exchange thermal energy between all of the cells 21, 21, ... which comprise the battery pack assembly 7 and the liquid in the flow path 85. The elements of the holding portion 81, the flow path 85, and the lid body 87 will be further described.

The holding portions 81, 81, ... are spaced apart from each other in both of the parallel direction V1 and the series direction V2. The holding portions 81, 81 located adjacent to each other in the series direction V2 are spaced apart from each other, with the first flat portion 73 located therebetween. The holding portions 81, 81 located adjacent to each other in the parallel direction V1 communicate with each other via a communicating portion 83. If the holding portions 81, 81, ... communicate with each other in the parallel direction V1, the space between the holding portions 81, 81 in the parallel direction V1 can be reduced. Thus, the space between the cells 21, 21 included in the battery pack 43 can be set, for example, to 1 mm or so. Further, if the holding portions 81, 81, ... communicate with each other in the parallel direction V1, stiffness of the temperature adjusting unit 5 in the series direction V2 is decreased, and thus, it is possible to make the temperature adjusting unit 5 elastic. Accordingly, the cells 21, 21, ... which comprise the battery pack 43 can be held in close contact with the holding portions 81.

The unit body 71 has one flow path 85. The flow path 85 communicates with a first pipe 91 and a second pipe 93. In the present embodiment, the first pipe 91 is a supply pipe (a supply section), and the second pipe 93 is a discharge pipe (a discharge section).

The lid body 87 is made of such as polypropylene. A periphery of a cover surface 88 of the lid body 87 (a surface located on the second flat portion 75 side of the unit body 71) is laser welded or thermo-compression bonded to a periphery of the unit body 71 on the second flat portion 75 side. Further, ribs 89, 89, ... extend along the parallel direction V1 on the cover surface 88 of the lid body 87. Each rib 89 is sandwiched between the holding portions 81, 81 located adjacent to each other in the series direction V2.

To adjust the temperatures of the cells 21, 21, ... by the temperature adjusting unit 5 of the present embodiment, a temperature adjusting system 101 shown in FIG. 13 may be used. FIG. 13 is a block diagram of the temperature adjusting system 101 according to the present embodiment.

The temperature adjusting system 101 according to the present embodiment includes the temperature adjusting unit 5 according to the present embodiment, a pump 103, and a heat exchanger 105. A liquid circulates in the temperature adjusting system 101 by operating the pump 103. Specifically, the liquid is supplied to the flow path 85 from the heat exchanger 105 through the first pipe 91, and the liquid is discharged from the flow path 85 through the second pipe 93 to be returned to the heat exchanger 105. In the heat exchanger 105, the liquid is cooled if the cells 21 are to be cooled, or is heated if the cells 21 1 are to be heated.

Now, a method for fabricating a battery module 1 according to the present embodiment will be described. FIG. 14 is a flow diagram for explaining a method for fabricating the battery module 1 according to the present embodiment.

First, in Step S101, the unit body 71 is fabricated by injection molding, for example (Step (a)).

Then, in Step S102, the unit body 71 and the lid body 87 are laser welded or thermo-compression bonded to each other (Step (b)). Specifically, the second flat portion 75 side of the unit body 71 and the cover surface 88 of the lid body 87 are opposed to each other, and then, the ribs 89 of the lid body 87 are sandwiched between the holding portions 81, 81 adjacent to each other in the series direction V2. After that, the periphery of the cover surface 88 of the lid body 87 and the periphery of the second flat portion 75 side of the unit body 71 are laser welded or thermo-compression bonded to each other.

Then, in Step S103, the cells 21, 21, ... are connected together in parallel to fabricate a battery pack 43 (Step (c)).

Then, although not shown, the temperature adjusting unit 5 is accommodated in the accommodating portion 3a of the case 3.

Then, in Step S 104, the battery pack 43 is inserted in the temperature adjusting unit 5. For example, each of the cells 21, 21, ... which comprise the battery pack 43 is forcibly inserted into a corresponding holding portion 81 of the temperature adjusting unit 5. As a result, the cells 21, 21, ... which comprise the battery pack 43 are held in close contact with the respective holding portions 81, 81, ... (Step (d)).

Then, in Step S 105, the battery packs 43, 43, ... are connected together in series to fabricate the battery pack assembly 7 (Step (c)).

Then, although not shown, the positive electrode terminal 13 is connected to the positive electrode connecting plate 57 of the battery pack assembly 7, and the negative electrode terminal 15 is connected to the negative electrode connecting plate 45 of the battery pack assembly 7. After that, the front face of the accommodating portion 3a of the case 3 is closed by the front panel 11. Then, the positive electrode terminal 13 is connected to the positive electrode terminal 17 for external connection provided to the front panel 11, and the negative electrode terminal 15 is connected to the negative electrode terminal 19 for external connection provided to the front panel 11. After that, the upper face of the accommodating portion 3a of the case 3 is closed by the lid 9. The battery module 1 of the present embodiment is fabricated in this way.

As described above, according to the temperature adjusting unit 5 of the present embodiment, each of the cells 21 is brought into close contact with both of the two side wall portions 77, 77 which define the holding portion 81, and is held in a position spacing the two side wall portions 77, 77 from each other with respect to the liquid. Thus, thermal energy can be exchanged between the liquid and all of the cells 21, 21, ... which comprise the battery pack assembly 7. Consequently, temperature variations of the cells 21, 21, ... of the battery module 1 can be reduced, for example, to 3°C or so. With this structure, it is possible to reduce variations in lifetime of the cells 21, 21, ... of the battery module 1. Thus, it is possible to provide a battery module 1 with superior performance.

Further, according to the temperature adjusting unit 5 of the present embodiment, the cells 21 are held in close contact with the respective holding portions 81. Therefore, even if the battery module 1 of the present embodiment oscillates, rattle of the cells 21, 21, ... of the temperature adjusting unit 5 can be avoided. This enables the battery module 1 of the present embodiment to be directly mounted, for example, on the body of an electric vehicle without using a floating for preventing oscillation. This means that the battery module 1 can be located anywhere without limitation.

Further, according to the temperature adjusting unit 5 of the present embodiment, thermal energy can be exchanged between each of the cells 21 and the liquid. In this structure, even if the cells 21, 21, ... which comprise the battery module 1 of the present embodiment generate heat because of discharge at a high current rate due to a temporary high load condition, a rapid increase in temperatures of the cells 21, 21, ... can be avoided unlike the case where an air-cooling method is used, because the thermal capacity of the liquid (e.g., water) in the temperature adjusting unit 5 is high. Thus, according to the present embodiment, it is possible to provide a useful battery module 1 capable of withstanding a temporary high load condition.

Further, the temperature adjusting unit 5 according to the present embodiment is made of resin. Thus, in the case where the battery module 1 is subjected to a high temperature, such as a vehicle fire, the temperature adjusting unit 5 is melted by the heat. This causes the liquid to flow out of the flow path 85, and extinguish the fire. Thus, according to the present embodiment, it is possible to provide a battery module 1 with improved safety.

In the case where the temperature adjusting unit 5 of the present embodiment is used as a cooling unit, it is possible to cool the cells 21, 21, .... Thus, it is possible to prevent an increase in temperatures of the cells 21 due to a large current charge or a large current discharge.

In the case where the temperature adjusting unit 5 of the present embodiment is used as a unit for increasing temperature, it is possible to increase the temperatures of the cells 21, 21, .... Thus, the battery module 1 can be used in a cold region, as well. This means that it is possible to provide a battery module 1 which can be charged or discharged, regardless of the environmental temperatures.

In general, a range of the temperature of a lithium ion secondary battery in which the lithium ion secondary battery can be charged is between 0°C and 60°C; a range of the temperature in which the lithium ion secondary battery can be rapidly charged is between 10°C and 45°C; and a practical range of the temperature in which the lithium ion secondary battery can be discharged is between -20°C and 60°C. Therefore, in the case where lithium ion secondary batteries are used as the cells 21, the temperatures of the cells 21 may be adjusted so that the temperatures of the cells 21 fall within the above ranges.

Further, according to the temperature adjusting unit 5 of the present embodiment, the periphery of the unit body 71 and the periphery of the lid body 87 are laser welded or thermo-compression bonded to each other. Moreover, each of the ribs 89, 89, ... is sandwiched between the holding portions 81, 81 adjacent to each other in the series direction V2. With this structure, the unit body 71 and the lid body 87 can remain fixed to each other even when shock is applied to the temperature adjusting unit 5. Accordingly, leakage of the liquid from the flow path 85 can be prevented.

Further, according to the unit body 71 of the present embodiment, the holding portions 81, 81, ... communicate with each other in the parallel direction V1. Thus, it is possible to reduce the space between the adjacent holding portions 81, 81 in the parallel direction V1, compared to the case where the holding portions do not communicate with each other in the parallel direction V1. This means that according to present embodiment, it is possible to downsize the unit body 71, thereby making it possible to provide a smaller battery module 1. In other words, according to the present embodiment, it is possible to arrange the cells 21, 21, ... in high density pattern in the battery module 1. Moreover, as described above, it is possible to bring each of the cells 21, 21, ... which comprise the battery pack 43 into direct contact with the holding portions 81.

Moreover, in the present embodiment, it is possible to downsize the pump 103 of the temperature adjusting system 101.

Specifically, a large current needs to be discharged to activate a motor of a vehicle, etc. Methods for discharging a large current include using a cell whose charge/discharge current is large to fabricate a battery module, and using a plurality of cells whose charge/discharge current is not so large to fabricate a battery module.

According to the former method, the cell needs to be large in size because the amount of active material contained in the cell is large. To adjust the temperature of the large cell, the speed of circulation of the liquid needs to be accelerated. Therefore, the pump needs to be large in size.

On the other hand, according to the latter method, which is the method disclosed in the present embodiment, the amount of active material contained in each of the cells 21 is not so large. For example, each cell 21 may contain an active material in an amount that is approximately equal to an amount of an active material contained in a battery used as a power supply for driving a mobile phone or a notebook computer. This means that it is possible to avoid an increase in size of the cells 21, 21, .... Since the surface area of the cells 21, 21, ... of the battery module 1 is larger than that of the cells according to the former method, it is possible to increase the heat transfer efficiency between the cells 21, 21, ... and the liquid. Thus, the temperatures of the cells 21, 21, ... can be adjusted without accelerating the speed of circulation of the liquid too much. For this reason, according to the present embodiment, an increase in size of the pump 103 can be avoided.

A reduction in size of the pump 103 can lead to a reduction in ratio of electrical energy used for adjusting the temperatures of the cells 21, 21, ... to the electrical energy supplied by the battery module 1. Thus, according to the present embodiment, it is possible to provide a battery module 1 with less energy consumption.

According to the present embodiment, the shape of the unit body is described using the first flat portion, the second flat portion, and the side wall portions. However, the shape of the unit body according to the present embodiment can also be described as follows. In the unit body according to the present embodiment, the holding portions are arranged in a matrix in a plate-like resin member. Each of the holding portions is like a recess having the lower face of the plate-like resin member as a bottom surface of the recess, and the holding portions communicate with each other in the parallel direction V1. The portion of the plate-like resin member other than the holding portions is a recess having the upper face of the plate-like resin member as a bottom surface of the recess. The flow path is composed of this recess and the lid body.

The present embodiment may have the following structures.

The holding portions may not necessarily communicate with each other in the parallel direction V1. In this case, the unit body has a repeating structure having a resin-molded article 79 as a repeating unit, not only in the series direction V2, but also in the parallel direction V1. However, if the holding portions communicate with each other in the parallel direction V1, the cells can be arranged in high density pattern in the battery module, and moreover, it is possible to downsize the battery module. Furthermore, if the holding portions communicate with each other in the parallel direction V1, the stiffness of the temperature adjusting unit 5 in the series direction V2 is decreased, and thus, it is possible to make the temperature adjusting unit 5 elastic. Accordingly, the cells which comprise the battery pack can be held in close contact with the holding portions. In view of this, it is preferable that the holding portions communicate with each other in the parallel direction V1. In the case where the stiffness of the temperature adjusting unit 5 in the series direction V2 is so low that the strength of the holding portions for holding the cells is not enough, some of the holding portions may be allowed to communicate with each other in the parallel direction V1.

The number of second flat portions may be equal to the number of the battery packs comprising the battery pack assembly, or may be more than the number of the battery packs comprising the battery pack assembly.

The lid body may be provided so as to close only the space between the two side wall portions which defines a flow path, on the second flat portion side of the unit body. The ribs may be provided to part of the lid body in the parallel direction V1, or may be sandwiched between communicating portions adjacent to each other in the series direction V2.

One of the first pipe and the second pipe may be a discharge pipe, and the other pipe may be a supply pipe.

The holding portions may have a structure according to the following first and second variations. The temperature adjusting unit may have a structure according to the second and third embodiments described later.

### (First Variation)

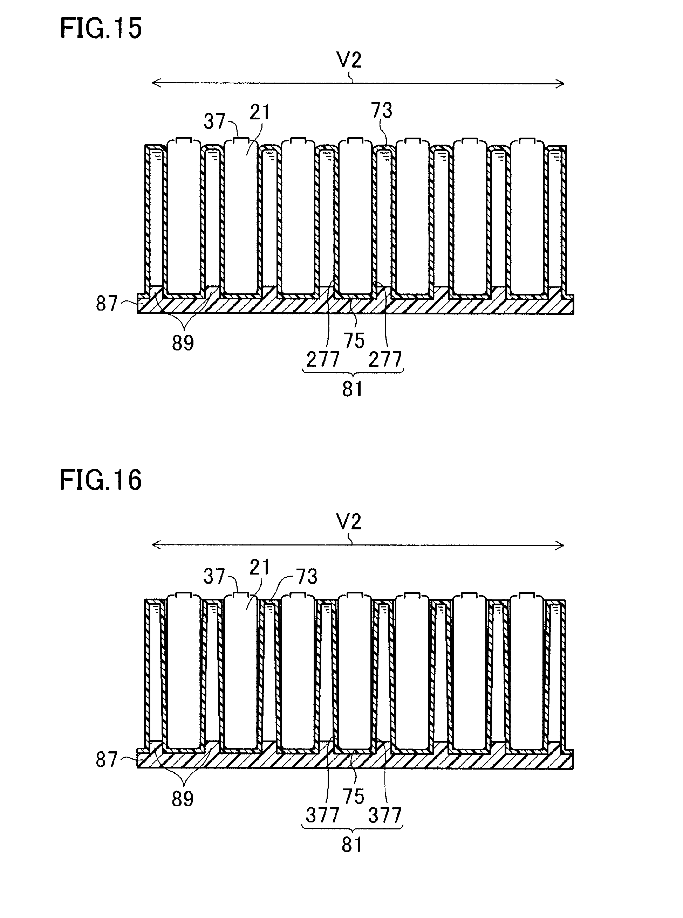

FIG. 15 is a cross section for showing a state in which in the first variation, each of the cells 21 is held in close contact with a holding portion 81 and in which a liquid is supplied to the flow path 85. FIG. 15 shows side views of the cells 21, 21, .... In the following descriptions, the structures different from those in the first embodiment will be mainly described.

In the present variation, the width between the two side wall portions 277, 277 which define the holding portion 81 is greater than the width of each of the cells 21 on the first flat portion 73 side. Specifically, on the first flat portion 73 side, the edges of the two side wall portions 277, 277 which define the holding portion 81 are rounded or chamfered. This structure has an advantage that each cell 21 can be inserted in the holding portion 81 more easily than in the case of the first embodiment.

The radius R for rounding the edges of the two side wall portions which define the holding portion may be great enough to make the first flat portion rounded.

### (Second Variation)

FIG. 16 is a cross section for showing a state in which in the second variation, each of the cells 21 is held in close contact with a holding portion 81 and in which a liquid is supplied to the flow path 85. FIG. 16 shows side views of the cells 21, 21, .... In the following descriptions, the structures different from those in the first embodiment will be mainly described.

In the present variation, the width between the two side wall portions 377, 377 which define the holding portion 81 is increased from the second flat portion 75 side to the first flat portion 73 side. Specifically, the width between the two side wall portions 377, 377 which define the holding portion 81 is approximately the same as the outside diameter of the cell 21 on the second flat portion 75 side, but is greater than the outside diameter of the cell 21 on the first flat portion 73 side. With this structure, each of the cells 21 can be inserted in the holding portion 81 more easily than in the case of the first variation.

The greater the width between the two side wall portions 377, 377 which define the holding portion 81 is than the outside diameter of the cell 21 on the first flat portion 73 side, the easier it is to insert the cell 21 into the holding portion 81. However, if the width between the two side wall portions 377, 377 which define the holding portion 81 is too much greater than the outside diameter of the cell 21 on the first flat portion 73 side, it becomes difficult for the temperature adjusting unit to adjust the temperatures of the cells 21, 21, .... In view of these, the two side wall portions 377, 377 which define the holding portion 81 may be tilted at about 1 to 5 degrees from a direction perpendicular to the second flat portion 75 (in other words, from an axial direction of the cell 21 held in close contact with the holding portion 81).

### «Second Embodiment of Invention»

The structure of the temperature adjusting unit differs between the first embodiment and the second embodiment. In the following descriptions, the structures different from those in the first embodiment will be mainly described.

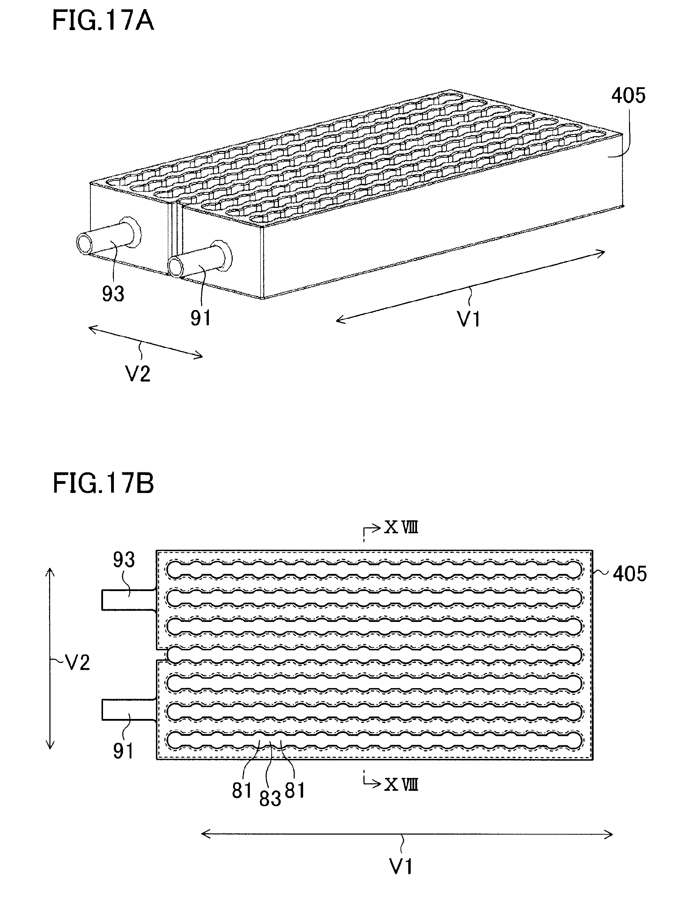

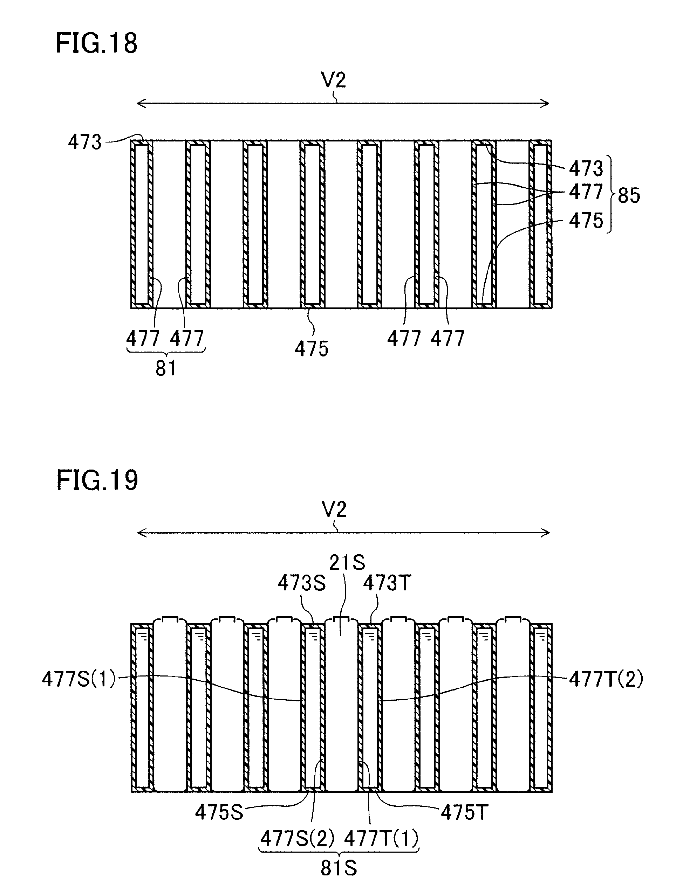

FIG. 17 is an oblique view of a temperature adjusting unit 405 according to the present embodiment. FIG. 17(b) is a view of the temperature adjusting unit 405 from above. FIG. 18 is a cross section taken along the line XVIII-XVIII in FIG. 17(b). FIG. 19 is a cross section for illustrating a state in which each of the cells 21 are held in close contact with a holding portion 81 and in which a liquid is supplied to a flow path 85, in the structure shown in FIG. 18. FIG. 19 shows side views of the cells 21, 21,....

The temperature adjusting unit 405 according to the present embodiment is formed by blow molding, and is made of a resin-molded article in which a first flat portion 473, a second flat portion 475, and a side wall portion 477 are integrally formed. The first flat portion 473 and the side wall portion 477 are the same as the first flat portion 73 and the side wall portion 77 in the first embodiment, respectively. However, the second flat portion 475 faces the first flat portion 473. That is, the temperature adjusting unit 405 has one second flat portion 475.

According to the temperature adjusting unit 405 of the present embodiment, each holding portion 81 is defined by two side wall portions 477, 477. The flow path 85 is defined by being surrounded by the first flat portion 473, the second flat portion 475, and the two side wall portions 477, 477.

For example, in the case of the holding portion 81S shown in FIG. 19, the holding portion 81S is defined by the side wall portion 477S(2) and the side wall portion 477T(1). The side wall portion 477S(2) forms a flow path 85, together with the first flat portion 473S, the side wall portion 477S(1), and the second flat portion 475S. The side wall portion 477T(1) forms a flow path 85, together with the first flat portion 473T, the side wall portion 477T(2), and the second flat portion 475T. Thus, the cell 21S is in close contact with both of the side wall portion 477S(2) and the side wall portion 477T(1), and is held in a position spacing the side wall portion 477S(2) and the side wall portion 477T(1) from each other with respect to the liquid.

To adjust the temperatures of the cells 21 by the temperature adjusting unit 405 according to the present embodiment, the temperature adjusting system 101 described in the first embodiment may be used.

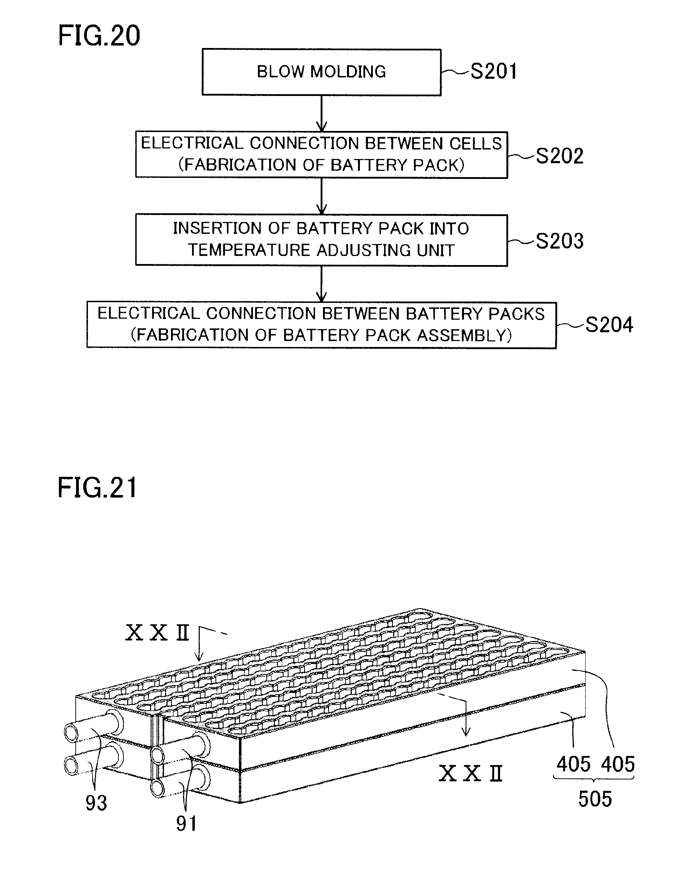

Now, a method for fabricating a battery module according to the present embodiment will be explained. FIG. 20 is a flow diagram for explaining a method for fabricating the battery module according to the present embodiment.

First, in Step S201, the temperature adjusting unit 405 is formed, for example, by blow molding (Step (e)).

Next, in Step S202, the cells 21, 21, ... are connected together in parallel to form a battery pack 43 (Step (f)).

Then, in Step S203, the battery pack 43 is inserted in the temperature adjusting unit 405. For example, each of the cells 21, 21, ... which comprise the battery pack 43 is forcibly inserted into a corresponding holding portion 81 of the temperature adjusting unit 405. As a result, the cells 21, 21, ... which comprise the battery pack 43 are held in close contact with the respective holding portions 81, 81, ... (Step (g)).

Then, in Step S204, the battery packs 43, 43, ... are connected together in series to fabricate the battery pack assembly 7 (Step (f)).

As described above, the structure of the temperature adjusting unit differs between the present embodiment and the first embodiment. However, in the present embodiment as well, the temperature adjusting unit 405 is made of a resin-molded article, and the holding portion 81 and the flow path 85 are separated by the side wall portions 477. Thus, the same effects obtained in the first embodiment can be obtained.

Further, the flow path 85 according to the present embodiment is defined by being surrounded by the first flat portion 473, the second flat portion 475, and the two side wall portions 477, 477. Thus, the lid body 87 in the first embodiment is not necessary in the present embodiment, and therefore, the number of parts can be smaller than the number of parts in the first embodiment. Accordingly, in the present embodiment, it is possible to reduce cost of the battery module, and reduce time for fabricating the battery module.

Moreover, in the present embodiment, the flow path 85 is defined by being surrounded by the first flat portion 473, the second flat portion 475, and the two side wall portions 477, 477. Therefore, leakage of the liquid from the flow path 85 can be prevented more than in the case of the first embodiment. For this reason, the structure in the present embodiment is useful in the case where a battery which may be damaged by water (e.g., a lithium ion secondary battery) is used as a cell 21.

According to the present embodiment, the shape of the temperature adjusting unit is described using the first flat portion, the second flat portion, and the side wall portions. However, the shape of the temperature adjusting unit of the present embodiment can also be described as follows. In the temperature adjusting unit according to the present embodiment, the holding portions are arranged in a matrix in a plate-like resin member. Each of the holding portions passes through the plate-like resin member in the thickness direction of the plate-like resin member, and the holding portions communicate with each other in the parallel direction V1. The portion of the plate-like resin member other than the holding portions has a hollow structure, which serves as a flow path.

The present embodiment may have the following structures.

Although details are omitted in the present embodiment, the holding portions may not necessarily communicate with each other in the parallel direction V1. However, it is preferable that the holding portions communicate with each other in the parallel direction V1 for the reason described in the first embodiment.

The holding portions may be the holding portions in the first variation, or may be the holding portions in the second variation.

### «Third Embodiment of Invention»

The battery module according to the second embodiment has one temperature adjusting unit formed by blow molding. In blow molding, in general, it becomes difficult to form a resin-molded article as the depth of the hollow of the resin-molded article is increased in a direction perpendicular to the direction along which the air is supplied. Thus, if the height of the cell 21 is increased, the cell 21 may protrude from the upper face or the lower face of the temperature adjusting unit 405.

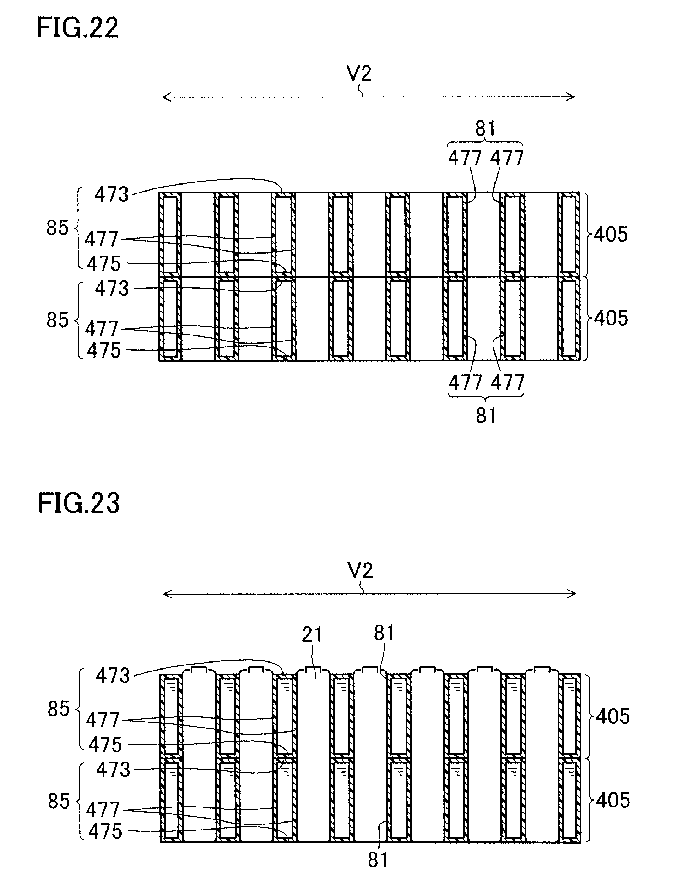

In view of this, in a temperature adjusting unit 505 according to the third embodiment, the temperature adjusting units 405, 405 of the second embodiment are stacked in the direction of height of the cells 21. FIG. 21 is an oblique view of the temperature adjusting unit 505 according to the present embodiment. FIG. 22 is a cross section taken along the line XXII-XXIII in FIG. 21. FIG. 23 is a cross section for illustrating a state in which each of the cells 21 is held in close contact with a holding portion 81 and in which a liquid is supplied to a flow path 85, in the structure shown in FIG. 22. FIG. 23 shows side views of the cells 21, 21, ....

As shown in FIG. 22, in the temperature adjusting unit 505 of the present embodiment, the second flat portion 475 of the upper temperature adjusting unit 405 and the first flat portion 473 of the lower temperature adjusting unit 405 face each other. The holding portion 81 of the upper temperature adjusting unit 405 and the holding portion 81 of the lower temperature adjusting unit 405 communicate with each other. A cell 21 is held in close contact with the holding portions 81, 81 which communicate with each other.

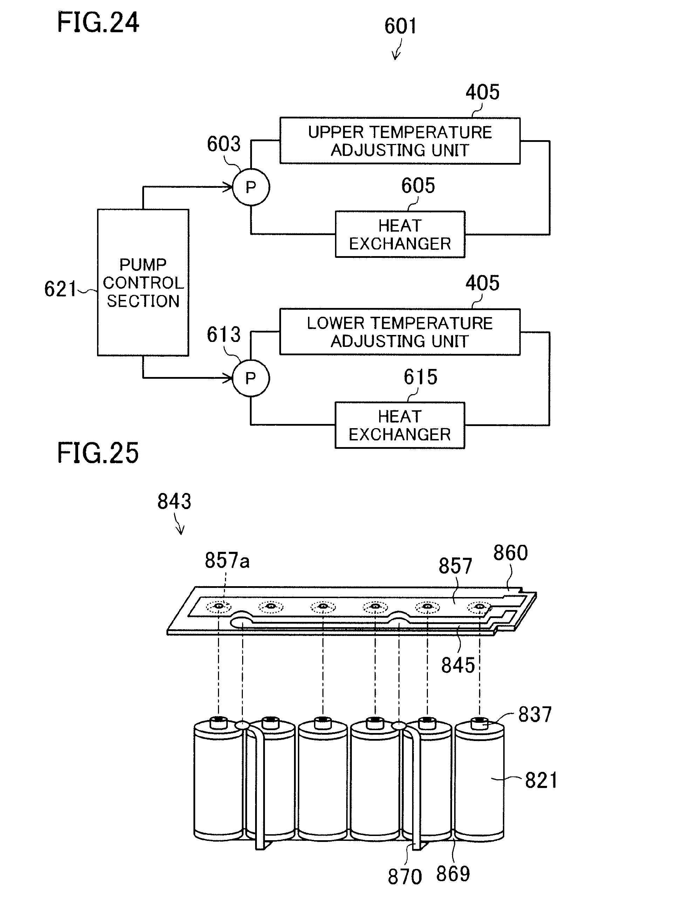

To adjust the temperatures of the cells 21 by the temperature adjusting unit 505 of the present embodiment, a temperature adjusting system 601 shown in FIG. 24 may be used. FIG. 24 is a block diagram of the temperature adjusting system 601 according to the present embodiment.

The temperature adjusting system 601 of the present embodiment includes an upper temperature adjusting unit 405, a pump 603, a heat exchanger 605, a lower temperature adjusting unit 405, a pump 613, a heat exchanger 615, and a pump control section 621. The pump 603 is for regulating a direction of circulation of the liquid in the flow path 85 of the upper temperature adjusting unit 405. The pump 613 is for regulating a direction of circulation of the liquid in the flow path 85 of the lower temperature adjusting unit 405. The pump control section 621 is for controlling the pump 603 and the pump 613 such that the liquid regulated by the pump 603 and the liquid regulated by the pump 613 circulate in reverse directions.

When the pump 603 and the pump 613 are activated, the liquid is supplied from the first pipe 91 and is discharged through the second pipe 93 in the upper temperature adjusting unit 405, whereas in the lower temperature adjusting unit 405, the liquid is supplied from the second pipe 93 and is discharged through the first pipe 91.

As described above, the structure of the temperature adjusting unit according to the present embodiment is approximately the same as the structure of the temperature adjusting unit according to the second embodiment. Thus, the same effects as those obtained in the second embodiment can be obtained.

Further, in the temperature adjusting system 601 of the present embodiment, the liquid in the upper temperature adjusting unit 405 and the liquid in the lower temperature adjusting unit 405 circulate in reverse directions. Accordingly, in the present embodiment, variations in temperatures of the cells in the battery module can be reduced more than in the first and second embodiments.

Specifically, in the first and second embodiments, it is more difficult to adjust (cool or heat) the temperatures of the cells 21 located close to the second pipe 93 (a discharge pipe) than the temperatures of the cells 21 located close to the first pipe 91 (a supply pipe).

On the other hand, in the present embodiment, the temperatures of the cells 21 located close to the first pipe 91 of the upper temperature adjusting unit 405 are adjusted by the liquid immediately after passing through the heat exchanger 605 for temperature adjustment, and the temperatures of the cells 21 located close to the first pipe 91 of the lower temperature adjusting unit 405 are adjusted by the liquid immediately before returning to the heat exchanger 615 after passing through the flow path 85. Similarly, the temperatures of the cells 21 located close to the second pipe 93 of the upper temperature adjusting unit 405 are adjusted by the liquid immediately before returning to the heat exchanger 615 after passing through the flow path 85, and the temperatures of the cells 21 located close to the second pipe 93 of the lower temperature adjusting unit 405 are adjusted by the liquid immediately after passing through the heat exchanger 605 for temperature adjustment. Accordingly, in the present embodiment, variations in temperatures of the cells in the battery module can be reduced more than in the first and second embodiments.

Furthermore, in the present embodiment, variations in temperatures of the cells 21 in the battery module can be reduced more than in the first and second embodiments, without accelerating the flow speed of the liquid that much. Thus, the ratio of electrical energy necessary for circulating the liquid to the electrical energy supplied by the battery module according to the present embodiment can be reduced, for example, to 0.5% or less. Accordingly, it is possible to provide a battery module with less energy consumption than the battery modules in the first and second embodiments.

The present embodiment may have the following structures.

The upper temperature adjusting unit and the lower temperature adjusting unit may be spaced apart from each other in the direction of height of the cells.

The temperature adjusting unit of the present embodiment may include three or more temperature adjusting units according to the second embodiment. The number of the temperature adjusting units according to the second embodiment may be decided by the height of the cells and the thickness of the temperature adjusting unit according to the second embodiment.

The liquid in the flow path of the upper temperature adjusting unit, and the liquid in the flow path of the lower temperature adjusting unit may be circulated by one pump. In this case, the flow of the liquid may be branched into a first flow to be supplied into the flow path of the upper temperature adjusting unit, and a second flow to be supplied into the flow path of the lower temperature adjusting unit.

In the temperature adjusting system, the liquid in the upper temperature adjusting unit, and the liquid in the lower temperature adjusting unit may circulate in the same direction. However, the above-described effect can be obtained if the liquid in the upper temperature adjusting unit and the liquid in the lower temperature adjusting unit circulate in reverse directions. Thus, it is preferable that the liquid in the upper temperature adjusting unit and the liquid in the lower temperature adjusting unit circulate in adverse directions.

The upper and lower temperature adjusting units may be placed such that the first pipe and the second pipe of the lower temperature adjusting unit are on the front side, and such that the first pipe and the second pipe of the upper temperature adjusting unit are on the back side. According to this temperature adjusting unit, variations in temperatures of the cells in the battery module can be reduced more than in the first and second embodiments, even if the liquid in the upper temperature adjusting unit and the liquid in the lower temperature adjusting unit are controlled to circulate in the same direction. However, variations in temperatures of the cells in the battery module can be reduced more in the temperature adjusting unit of the present embodiment, than in this temperature adjusting unit. Therefore, the temperature adjusting unit of the present embodiment is preferable to this temperature adjusting unit.

### «Other Embodiments»

The temperature adjusting units of the first to third embodiments may have the following structures.

The number of holding portions in the temperature adjusting unit may be equal to the number of cells which comprise the battery pack assembly. Needless to day, the number of battery packs which comprise the battery pack assembly is not limited to seven. The number of cells which comprise each battery pack is not limited to twenty.

The shape of a horizontal cross section of each holding portion in the temperature adjusting unit may be approximately the same as the outer shape of each cell. The cells may have a rectangular shape.

The temperature adjusting systems of the first to third embodiments may have the following structures.

Examples of the liquid for adjusting the temperatures of the cells may include fresh water, as well as include a mixed solution in which ethylene glycol, a rust inhibitor, and water are mixed, and a liquid in which an antiseptic or a fungicide is mixed into water.

In the case where the temperature adjusting unit is used as a unit for increasing temperature, a heat pump may be used to circulate the liquid.

The battery modules of the first to third embodiments may have the following structures.

The battery module can be used as a power supply for driving an electric motorcycle or electric play equipment.

The location of the battery module is not specifically limited. In the case where the battery module is used as a power supply for driving an electric vehicle, the battery module may be located, for example, under the floor of the electric vehicle, in a forward portion of the vehicle (e.g., the hood) in the direction of movement, or in a back portion of the vehicle (e.g., trunk) in the direction of movement.

The materials for the case, the front panel and the lid are not limited to the materials mentioned in the first embodiment.

The battery module may not include the case, the lid, or the front panel. However, if the battery module has the case, the lid, and the front panel, it is possible to prevent the temperature adjusting unit from being damaged by external shock, and also possible to mount the battery module without considering the direction of the battery module. Thus, it is preferable that the battery module has the case, the lid, and the front panel.

The cells in the first to third embodiments may have the following structures.

The cells may be a secondary battery (e.g., a nickel metal hydride battery) other than a lithium ion secondary battery.

Both of the positive electrode and the negative electrode may have a known structure. Known materials can be used as materials for the positive electrode active material, the negative electrode active material, the porous insulating layer, and the electrolyte.

The battery packs of the first to third embodiments may have the following structures.

The bottom surface of a battery case may be the negative electrode terminal of the cell. FIG. 25 is an exploded perspective view of a battery pack 843.

According to the battery pack shown in FIG. 25, the positive electrode terminal 837 of each of the cells 821 passes through a through hole 857a formed in a positive electrode connecting portion 857 of a circuit board 860, thereby being connected to the positive electrode connecting portion 857 of the circuit board 860. Further, the negative electrode terminal of each of the cells 821 is connected to a negative electrode connecting portion 845 of the circuit board 860 via a negative electrode connecting plate 869 and a conducting portion 870.

According to the battery pack 843 shown in FIG. 25, the conducting portion 870 is provided along the outer surface of the cell 821. Thus, a temperature adjusting unit may include not only a holding portion with which the cell 821 is held in close contact, but also an accommodating portion for accommodating the conducting portion 870.

Since the battery pack 843 shown in FIG. 25 includes the conducting portions 870, 870, the degree of close contact of the cells 821 with the holding portions is less than the degree of close contact with the holding portions according to the first to third embodiments, in the temperature adjusting unit holding the cells 821,821, ... which comprise the battery pack 843. Moreover, the conducting portions 870, 870 are provided along the outer surfaces of some of the cells 821 which comprise the battery pack 843. Therefore, the temperatures of the cells 821, 821 to which the conducting portion 870 is provided along the outer surface are less easily adjusted than the temperatures of the cells 821, 821, ... to which the conducting portion 870 is not provided. In view of this, it is preferable that in the battery pack, the outer surface and the upper face of a battery case serve as negative electrode terminals of the cell.

The materials for the negative electrode plate, the negative electrode connecting plate, the positive electrode connecting plate, and the positive electrode connecting member are not limited to the materials mentioned in the first embodiment. The thicknesses of these elements are not limited to the figures mentioned in the first embodiment.

The negative electrode plate is just for fixing the cells, and therefore, does not necessarily have to be conductive.

Double-faced tape may be attached to each of the upper face and the lower face of the insulating plate.

The number of through holes formed in each of the negative electrode connecting plate, the insulating plate, and the positive electrode connecting plate, and the number of positive electrode connecting members, may be the same number of cells comprising the battery pack.

### INDUSTRIAL APPLICABILITY

As described above, the present invention is useful as a power supply for driving a vehicle, an electric motorcycle, electric play equipment, etc.

### DESCRIPTION OF REFERENCE CHARACTERS

- 1: battery module
- 5: temperature adjusting unit
- 7: assembly
- 21: cell
- 43: battery pack
- 71: unit body
- 73: first flat portion
- 75: second flat portion
- 77: side wall portion
- 79: resin-molded article
- 81: holding portion
- 85: flow path
- 87: lid body
- 88: cover surface
- 89: rib
- 91: first pipe
- 93: second pipe
- 101: temperature adjusting system
- 103: pump
- 277: side wall portion
- 377: side wall portion
- 405: temperature adjusting unit
- 473: first flat portion
- 475: second flat portion
- 477: side wall portion
- 505: temperature adjusting unit
- 601: temperature adjusting system
- 603: pump
- 613: pump
- 621: pump control section
- L1: center line
- V1: parallel direction
- V2: series direction

## Claims

1. A battery module, comprising:
a plurality of cells electrically connected to each other; and
a temperature adjusting unit for adjusting temperatures of the cells, wherein
the temperature adjusting unit is a resin-molded article in which a first flat portion, a second flat portion located on an opposing side of the first flat portion, and a side wall portion connected to the first flat portion and the second flat portion are integrally formed,
a holding portion for holding a corresponding one of the cells, and a flow path in which a liquid for adjusting the temperatures of the cells are separated by the side wall portion, and
each of the cells is held in close contact with the holding portion separated by the side wall portion.

2. The battery module of claim 1, wherein
the temperature adjusting unit includes a unit body and a lid body,
the unit body has a repeating structure having, as a repeating unit, a resin-molded article in which the first flat portion, the side wall portion, the second flat portion, and the side wall portion are consecutively connected to each other,
the lid body is provided on a second flat portion side of the unit body,
the flow path is defined by the first flat portion, two of the side wall portions, and the lid body, and
the holding portion is defined by two of the side wall portions and the second flat portion.

3. The battery module of claim 2, wherein
the lid body has a cover surface opposed to the second flat portion side, and a rib provided on the cover surface,
the rib is sandwiched between the two side wall portions which define the flow path, and
a periphery of the cover surface is laser welded or thermo-compression bonded to a periphery of the unit body.

4. The battery module of claim 1, wherein
the holding portion is defined by two of the side wall portions, and
the flow path is surrounded and defined by the first flat portion, the second flat portion, and two of the side wall portions.

5. The battery module of claim 4, wherein
the temperature adjusting unit includes two temperature adjusting units each having a same shape, and
in the two temperature adjusting units,
the first flat portion of one temperature adjusting unit and the second flat portion of the other temperature adjusting unit are opposed to each other, and
the holding portion of the one temperature adjusting unit and the holding portion of the other temperature adjusting unit communicate with each other.

6. The battery module of claim 1, wherein
a width between two of the side wall portions which define the holding portion is greater than a width of each of the cells on a first flat portion side.

7. The battery module of claim 6, wherein
the width between the two side wall portions which define the holding portion is increased from a second flat portion side to the first flat portion side.

8. The battery module of claim 1, wherein
each of the cells has a battery case made of a metal can.

9. The battery module of claim 1, wherein
the temperature adjusting unit further includes a supply section for supplying the liquid into the flow path, and a discharge section for discharging the liquid from the flow path.

10. The battery module of claim 1, wherein
the temperature adjusting unit is a cooling unit for cooling the cells, and
the liquid is a refrigerant for cooling the cells.

11. A method for fabricating the battery module of claim 2, comprising the steps of:
(a) forming the unit body by injection molding,
(b) providing the lid body to the second flat portion side of the unit body,
(c) electrically connecting the plurality of cells to each other, and
(d) holding the cells in close contact with the respective holding portions of the unit body.

12. The method for fabricating the battery module of claim 4, comprising the steps of:
(e) forming the temperature adjusting unit by blow molding,
(f) electrically connecting the plurality of cells to each other, and
(g) holding the cells in close contact with the respective holding portions of the temperature adjusting unit.

13. A temperature adjusting system comprising:
the battery module of claim 1, and
a pump for circulating the liquid through the flow path.

14. A temperature adjusting system comprising:
the battery module of claim 5, and
a pump control section, wherein
the pump control section allows the liquid in the flow path of the one temperature adjusting unit and the liquid in the flow path of the other temperature adjusting unit to circulate in reverse directions.
